# EUROPEAN PATENT SPECIFICATION

(11) **EP 2 616 248 B1**
(45) Date of publication and mention of the grant of the patent: **20.05.2015**
(21) Application number: 11767625.4
(22) Date of filing: 16.09.2011
(51) Int. Cl.: G03C 11/08, G03C 11/14, B41M 7/00, G02B 1/11

(54) **METHOD FOR PRODUCING A PHOTOGRAPHIC PICTURE**
VERFAHREN ZUR HERSTELLUNG EINES FOTOGRAFISCHEN BILDES
PROCÉDÉ DE PRODUCTION D'UNE IMAGE PHOTOGRAPHIQUE

(30) Priority: 19.09.2010 EP 10009884
(43) Date of publication of application: 24.07.2013
(73) Proprietor: Bühler, Reinhard, 79108 Freiburg (DE)
(72) Inventor: Bühler, Reinhard, 79108 Freiburg (DE)
(86) International application number: PCT/EP2011/004662
(87) International publication number: WO 2012/034709

(56) References cited:
- DE-A1- 2 256 656
- FR-A1- 2 627 972
- US-A1- 2009 014 416
- ZORN, SABINE: "Das Diasec® Verfahren - Schäden, Stabilität, Konservierung und Restaurierung", Hochschule der Künste Bern , 27 April 2005 (2005-04-27), pages FRONTPG.-1, 15-22, 37-46, 109-110, 113-118, XP002668348, Retrieved from the Internet: URL:http://web.archive.org/web/20050427174 942/http://www.hkb.bfh.ch/fileadmin/PDFs/K onservierung/Diplom_2004/diplom_04_zorn_sa bine.pdf [retrieved on 2012-01-31]
- Anonymous: "LUXAR, Anti-reflective Glass", GlasTrösch , 3 December 2008 (2008-12-03), XP002668347, Retrieved from the Internet: URL:http://web.archive.org/web/20081203163 739/http://www.mdglass.net/downloads/fireg lass/luxarpro.pdf [retrieved on 2012-01-19]

## Description

Techniques for the high quality presentation of photographs are known from the art, where the face of the photograph is attached to a pane (or sheet) of acrylic glass ("Plexiglas") or polyvinyl chloride (PVC) as a transparent carrier plate, by use of a transparent silicon adhesive. German patent DE 2256656 discloses such a technique, which today is offered, among others, under the brands Diasec®, Artsec® or Lumasec®. Zorn (Zorn, Sabine: "Das Diasec®-Verfahren - Schaden, Stabilität, Konservierung und Restaurierung"; Hochschule der Künste Bern; April 27, 2005; p. 1-118) provides an overview on practical aspects of "Diasec®" photographs face mounted to Plexiglas with a special focus on possible damages to such prints and their repair from a conservatory view point. Photographs presented by this way appear particularly sharp and convey an unusual impression of depth and plasticity, which significantly enhances the photograph's impact.

The use of plastic materials such as acrylic glass or PVC, however, results in a serious production-related problem: As described hereinbelow in more detail, bonding of the photograph to the carrier plate is performed by use of a liquid adhesive and under application of pressure, resulting in an excess of adhesive escaping along the edges of the sandwich of carrier plate and photograph. Inevitably, some adhesive will also spill onto the face of the carrier plate ("face" meaning the carrier plate's surface directed towards the viewer, once the mounting of the picture is completed), which during the production process usually points downwards. Wiping the excess of adhesive off the carrier plate's face is virtually impossible, since the liquid adhesive shows a strong tendency to smear and because even slight pressure applied to a wipe will cause small scratches in the highly vulnerable surface of the carrier plate. The same holds true when using customary silicon remover, which allows for the removal of silicon adhesive from certain surfaces. Again, the successful application of such silicon removers requires rubbing and the application of relatively high pressure, which will damage a carrier plate made from any of the mentioned plastic materials and, thus, is not compatible with the desired premium appearance of a photograph presented this way. Thus, in practice, manufacturers have turned to the use of oversized carrier plates, including a considerable allowance of material along the edges (i.e., adding along all four edges a wide rim around both the carrier plate and the photograph), which subsequently, after curing of the adhesive, is trimmed off. Trimming is done by sawing the sandwich of photograph and carrier plate. In order to make sure that all traces of excess adhesive which got to the carrier plate's face reliably can be removed, the allowance must be sufficiently wide (e.g., about 10 cm or more). By definition this means a considerable waste of material, since the usable dimensions of the material are considerably smaller than the dimensions of the starting material, rendering this procedure quite costly. Furtheron, sawing results in rough edges, which don't fit well to the intended overall appearance of a photographic picture prepared by the mentioned technique, which again requires an additional production step, namely polishing the edges. Accordingly, the inevitable spilling of adhesive, together with the impossibility to remove the spilled adhesive from the face of the transparent carriers, add two steps to the bonding procedure, rendering the manufacturing of such photographic pictures less economic than would be desirable. FR 2627972 discloses a manufacturing method for photographic medallions, where a UV curable glue is used for mounting a photograph to a self-adhesive UV filter, which in turn is attached to a pane of glass. Spilling of glue to the front side of the glass is prevented by the tapered protruding edge of a metal carrier plate. However, the use of such metal mounting would not be feasible for photographic pictures larger than a typical medallion is, since it adds considerable weight and requires the pane of glass to be provided with a bevel along all its edges which would be very expensive to achieve for sizes larger than a medallion.

Accordingly, the problem to be solved by the present invention was to overcome the disadvantages of the state of the art. In particular, the problem to be solved by the present invention was to provide a way to produce photographs bonded with their face to a transparent carrier in a more economic way, requiring as few production steps and as little material as possible.

According to the invention, the problem is solved by providing a method for the production of a photographic picture, comprising a photograph bonded with its face to a transparent carrier, the method comprising the following steps:
a) providing a transparent carrier made of anti-reflective glass,
b) applying an appropriate amount of adhesive to the carrier of step (a),
c) forming a sandwich by applying to the carrier of step (a) a photograph with its face towards the face of the carrier to which the adhesive had been applied,
d) applying pressure to the sandwich of carrier, adhesive and photograph, and, where appropriate,
e) bonding the back of the photograph to a protective layer.

In a further embodiment of the invention, the invention relates to the use of a pane of anti-reflective glass as the transparent carrier in the production of a photographic picture, the photographic picture comprising a photograph bonded with its face to a transparent carrier and, where appropriate, comprising a protective layer on its back.

In a further embodiment of the invention, the invention relates to a photographic picture, comprising a photograph bonded with its face to a transparent carrier and, optionally, comprising a protective layer on its back, characterized in the transparent carrier being made of anti-reflective glass.

Additional embodiments are given in the claims.

"Anti-reflective glass" means mineral glass (i.e., glass on the basis of silicon dioxide and additional oxidic compounds) or, in another embodiment, a plastic material having optical properties similar to those of mineral glass, e.g., acrylic glass or transparent polyvinyl chloride, characterized by an anti-reflective coating on one or on both sides which suppresses reflections at the glass/air interface. Usually such anti-reflective coatings are made from one or more layers of metal salts (e.g., magnesium fluoride, calcium fluoride and/or certain metal oxides), and they may be applied to the material to be coated, for example, by dipping or by chemical vapour deposition. One production technique is vacuum (or magnetron) sputtering. Examples of brands of glass panes coated this way are Mirogard® (Schott, Germany), Luxar® (Trösch, Switzerland), ARTControl® (Flabeg, Germany), ARC-Glas (pgo, Germany) and VISION-LITE® (Eckelt, Germany). Typical applications of these materials in situations where a partition is needed, and some of their physical properties, are disclosed in "LUXAR® - anti-reflective glass" (Dec 03, 2008), published by Glas Trösch AG. Such coatings convey anti-reflective properties to the coated surface by interference. Frequently they are referred to as quarter-wave antireflection coatings, refering to their thickness corresponding to a quarter of the wavelength of the (reflected) light to be extinguished by interference. However, in the context of the present invention, the anti-reflective properties of such materials are not relevant. Rather, the physico-chemical surface properties of such coatings and their behaviour against the adhesives used for carrying out said method provide an unexpected advantage over the art, as explained in detail below.

The "transparent carrier" usually has the shape of a pane and is made of a transparent, usually colourless or almost colourless material. Transparent carriers made of mineral glass are preferably made of clear glass, characterized by a much lighter green colour than normal mineral glass as used, e.g., for the production of window panes and the like. The use of clear glass has the advantage that the greenish colour shift imposed to a photograph presented behind standard float glass is eliminated or at least strongly reduced. Usually the glass pane has a thickness of 2-8 mm, preferably 3-6 mm and, in a particularly preferred embodiment, 4 mm or 5 mm. However, other thicknesses such as, e.g., 15 mm or 20 mm are possible as well.

"Photograph" means any form of picture requiring, in order to be formed, at least at one step of its formation process the action of light on a device capable of recording the action of light. Said "device capable of recording the action of light" may be photographic film or photographic paper, but may also be the sensor of a digital camera or of a scanner. In the context of the present invention, the term "photograph" comprises not only the primary image directly formed by the action of light (an example of such primary image would be an exposed and developed sheet of photographic paper), but also copies made by any suitable means (e.g., by printing). For example, the photograph may be selected from the group comprising:
i. a picture formed by exposing to light and developing a sheet of black-and-white photographic paper,
ii. a picture formed by exposing to light and developing a sheet of colour photographic paper based on the RA-4 process,
iii. a picture formed by exposing to light and developing a sheet of colour photographic paper based on the silver dye-bleaching process, and
iv. a picture formed by printing onto a medium (the medium, if appropriate, being characterized by an acceptable coating), for example a medium made of paper, with appropriate ink, inks or dyes.

In case (iv), inks that are particularly well suited for the production of photographs are dye inks and pigment inks. Inkjet printers which are perfectly qualified for the production of photographs to be used for carrying out the present invention are now widely available, e.g. from companies such as Epson, HP, Canon, and others.

Besides the use of opaque photographs (such as photographs made from photographic paper), it is also possible to use transparent photographs for carrying out the present invention. Examples for transparent materials useful for the production of transparent photographs are Duratrans (Kodak, USA) and Clearfilm (Ilford, Switzerland).

According to the invention, the transparent carrier and the photograph are bonded to each other by adhesion. The adhesive used for this purpose must fulfill the following requirements:
- good to excellent adhesion to both surfaces to be bonded to each other,
- curing with no or only limited access of air,
- no agressive effect on the photograph's dyes, inks and/or pigments,
- must be virtually colourless and must appear highly transparent (at least after being shaped to a thin film by the pressure applied in step (d), because the beholder sees the photograph only through the adhesive layer),
- sufficiently low viscosity, allowing under the pressure applied in step (d) for the formation of a very thin layer of adhesive between the transparent carrier and the photograph.

According to the invention, silicon adhesives, particularly one-component silicon adhesives, are used. Today, a wide range of different silicon adhesives is available and are well-known to the person skilled in the art, comprising acidic silicone adhesives which upon curing set free acetic acid (so-called acetate systems), alkaline silicone adhesives which usually are based on amines, and neutral silicone adhesives usually based on oxim, benzamide or alkoxy chemistry. In one embodiment, acidic silicone adhesives are used. In another embodiment, neutral silicone adhesives are used. In still another embodiment, alkaline silicone adhesives are used.

The photograph can be protected by application of a protective layer to its back, which usually is done after producing in steps (a) to (d) the sandwich of transparent carrier and photograph (bonded together by a layer of adhesive). Usually (although this is not a requirement) the protective layer has exactly the same external dimensions as the transparent carrier and is flush, along all edges, with the carrier. Particularly preferred protective layers are made of, e.g., aluminum, Aludibond (a sandwich material made of two layers of aluminum, separated by a layer of synthetic resin) or a plastic material such as, e.g., polystyrene. Usually the thickness of the protective layer is 1-6 mm. In cases where the photograph is a transparent, slide-like material, the protective layer may be made of a transparent material as well, particularly of glass or a plastic material with glass-like optical properties.

In order to transform the applied volume of adhesive to the desired thin layer between the transparent carrier and the photograph, pressure and pressing time in step (d) are chosen as to allow for the formation of an adhesive layer having a thickness of no more than 1 mm. In a preferred embodiment, the resulting adhesive layer has a thickness of 0,01 to 0,5 mm. In another preferred embodiment, the resulting adhesive layer has a thickness of 0,05 to 0,2 mm.

Upon the application of pressure in step (d), excess adhesive escapes along the edges of the assembly. As already pointed out above, the removal of excess adhesive spilled onto the face of the transparent carriers known from the art (made of acrylic glass or PVC) is virtually impossible and, thus, necessitates the use of oversize carriers and oversize photographs, followed by trimming the sandwich after curing of the adhesive. While removal of the customary silicon adhesives from native surfaces of mineral glass is very difficult as well (due to the strong adhesion of wet silicone to mineral glass, attempts to remove silicone from, glass result in serious smudging), the inventor has now found that, surprisingly, these adhesives can be very easily and completely wiped off the surface of glass coated with an anti-reflective coating (as shown in example 2 below), without any visible traces of adhesive remaining on the surface. Accordingly, using glass with an anti-reflective coating, at least glass coated on the front side of the carrier distal to the photograph, unexpectedly provides a significant alleviation when preparing photographic pictures comprising a photograph bonded to a transparent carrier. On the other hand, which is unexpected as well, the strength of the bonding conveyed by cured silicone adhesive to an anti-reflective coating is competitive to the strength of the bonding to native mineral glass, and in any case the bonding is much stronger than the bonding to acrylic glass. Thus, the use of anti-reflective glass for the production of photographic pictures provides a great advantage over the use of (non-anti-reflective) acrylic glass known from the art, because it is virtually impossible to remove excess adhesive from the surface of the latter without damaging the very susceptible surface.

When comparing several adhesives based on different chemistries, it turned out that acidic silicone adhesives (silicone adhesives on acetate base) are particularly well suited for carrying out the invention, since they are extremly easy to remove from anti-reflective coatings as long as they are wet. Accordingly, in a preferred embodiment of the invention, the adhesive used in step (b) of the claimed method is an acidic silicone adhesive.

Since the removal of excess adhesive is necessary only on the front side of the transparent carrier (the front side meaning the side distally to the photograph bonded to the other side of the carrier), it is sufficient to use a transparent carrier coated only on its front side with an anti-reflective coating. While an additional anti-reflective coating on the back side of the carrier (the back side meaning the side proximally to, or facing, the photograph bonded to the carrier) does no harm thanks to the excellent adhesion of adhesives after curing (not while still wet!) to anti-reflective coatings, and while therefore the use of transparent carriers coated with an anti-reflective coating on both sides is encompassed by the present invention, using transparent carriers characterized by an anti-reflective coating on only one side is economically advantageous, because such carriers often are less expensive.

As already mentioned, a further advantage of the method according to the invention over the use of acrylic glass and other plastic materials as known from the art is the excellent adhesion after curing of a wide range of adhesives, particularly adhesives on silicone basis, on an anti-reflective coating (and on native glass surfaces as well, which comes into play when transparent carriers are used which have only one coated side), without the need of adhesion promoters or even grinding of the carrier's surface as is customary when using acrylic glass as transparent carrier. This finding is of particular relevance for the production of particularly large photographic pictures (e.g., 2 x 3 m and larger), and when particularly thick transparent carriers are used (e.g., 20 mm and more), since in such cases under all circumstances it must be avoided that photograph and carrier separate from each other. The reason for this concern is safety considerations: although the glass pane to which the photograph is bonded usually is called the "carrier", in fact the attachment either directly to the wall or to a frame of such photographic pictures is normally achieved via the back of the sandwich of photograph and carrier. Usually, metal rails are bonded to the protective layer on the back of the photograph and then used to attach the photographic picture to either the wall or a frame. Accordingly, the transparent carrier is held in place only by its bonding to the photograph. Should both separate due to failure of the bonding, the carrier would fall down and could cause considerable injury and damage. For this reason a bonding as strong as possible is of high importance. It should also be mentioned that a higher strength of the bonding, from a practical standpoint, means higher tolerance of the production process against non-optimal conditions such as, e.g., remains of oil on the carrier's surface or unfavourable environmental factors (temperature, humidity etc.).

### Example 1

A photograph was obtained by exposing and developing a 102 x 143 cm sheet of Ilfoflex® photographic paper (Illford, Switzerland). Along all four sides, a white rim (2 cm wide) was allowed. A pane of 5 mm thick anti-reflective Luxar® glass (Trösch, Switzerland), coated with an anti-reflective layer on one side only, was cleaned and laid, coated side down and with the short edge parallel to the rolls, onto the table of a laminator (custom made by Flexa Automation for Sign-Makers, Colle Umberto, Italy). The laminator is characterized by a freely turning steel roll (diameter 19 cm) and an electrically driven lower rubber roll (same diameter). Spring arrays on both sides allow to apply a pressure of up to 1,2 tons. A cartridge was used to apply silicon adhesive (EGOCON Silicon 100, EGO Dichtstoffwerke, Gilching, Germany) to the first 25 cm of the glass pane next to the rolls. The photograph was, face down, applied to the section of the glass pane provided with adhesive, while the rest of the photograph still was held up in the air. The assembly of glass pane, adhesive and partially applied photograph was fully moved to the rolls, and the "feed" function of the laminator was started, resulting in the assembly being moved under pressure through the rolls with a speed of about 50 cm / min. The pressure was adjusted to the maximum possible, resulting in the applied adhesive being rolled out to a very thin film. Excess adhesive escaped along the edges of the assembly. After the assembly had been transported through the arrangement of the two rolls by about 15 cm, additional adhesive was applied in form of a wiggly line to the glass, while the feeding of the laminator continued. Sufficient amounts of adhesive were applied as required in order to avoid the introduction of air bubbles. During the bonding process the photograph was held in the air all the time, providing sufficient room between the glass pane and the photograph in order to apply adhesive. After the pane and the photograph bonded to it were fully transported through the arrangement of the two rolls, the obtained sandwich was flipped upside down, and the excess adhesive spilled onto the face of the glass pane was wiped off by use of disposable paper towels and soap water, which was obtained as a 1:100 dilution of customary detergent concentrate (Caribic Körperpflege Cremeseife, Dalli-Werke, Stolberg, Germany) in tap water. The sandwich was then left for curing over night. On the next day, using a sharp knife the protruding rims of the photograph were trimmed off along the edges of the glass pane. A sheet of polystyrene as protective layer (102 x 143 cm, 2 mm thick) was provided with doublesided adhesive foil, the protective foil was peeled off, and the sheet was applied to the back of the sandwich of glass pane and photograph by use of the laminator. The thus obtained photographic picture was flipped upside down again, and, with a sharp knife, the protruding rims of the polystyrene were trimmed off along the glass edges. Finally, aluminum rails serving as hanger and spacer to the wall were bonded to the protective layer by use of doublesided adhesive foil.

### Example 2

In order to test the ease of removal of excess adhesive from the surface of different transparent carriers, small pieces (20 x 30 cm) of the same glass as used in example 1 (single-sided anti-reflective Luxar® glass) and of standard acrylic glass were provided. Small volumes (about 0,5 ml) of adhesive were applied to either the coated or the native side of the pieces of glass, or to one side of the acrylic glass, and, by use of a spatula, distributed over the surface as evenly as possible. As a next step, wiping experiments were made. Towards this, bales of disposable paper towels were formed, wettened and used to wipe over the prepared surfaces. Each bale was used only for one single wiping stroke and was disposed thereafter, in order to make sure that any adhesive wiped off in the course of a wiping stroke would not be re-applied to the surfaces in the course of the next wiping stroke. Upon wiping, great care was applied to warrant that the wiping conditions (pressure and speed of the wiping stroke, humidity of the bale, etc.) on all tested surfaces were exactly the same, for each wiping stroke. Several wiping strokes were performed for each experiment, and the progress (if any) of adhesive removal from the tested surfaces was monitored by visual inspection. In each experiment, the testet surfaces were treated with wiping strokes in an alternating manner, and the experiments were stopped as soon as the first of the surfaces tested in parallel did not show any visible remains of adhesive any more.

In a first experiment, Ottoseal S 50 (Hermann Otto GmbH, Fridolfing, Germany) was used as adhesive, and the paper bales were wettened with soap water obtained as described in example 1. In a second experiment, Ottoseal S 100 was used as adhesive, and the paper bales were wettened with ethanol. Both experiments were repeated three times. It could be unambigously shown that full removal of the adhesive from the surface coated with an anti-reflective coating was easily possible without any problems, requiring only a few wiping strokes until no remaining adhesive could be visually detected any more, while under the same conditions on the native glass surface as well as on the acrylic glass surface serious smudging was observed, leading to the formation of a smear which was virtually not removable any more from the surface.

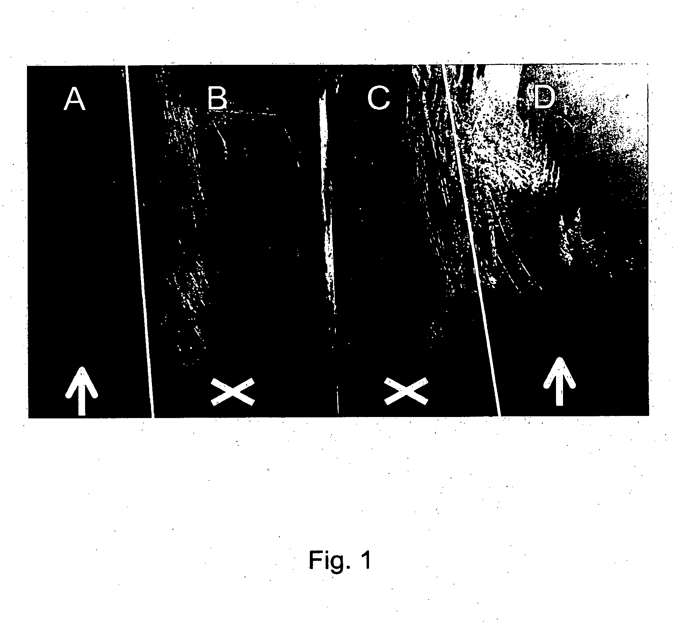

The obtained results are shown in figures 1-3. Arrows indicate the area where wiping was applied, crosses indicate the remaining area whithout wiping.
- Fig. 1:: Comparison of glass having an anti-reflective coating (panels A, B) and uncoated acrylic glass (panels C, D). The attempts to wipe off the applied adhesive (Ottoseal S 100) were successful in case of the coated glass and led to complete removal of adhesive (panel A), but led to serious smudging in case of acrylic glass (panel D).

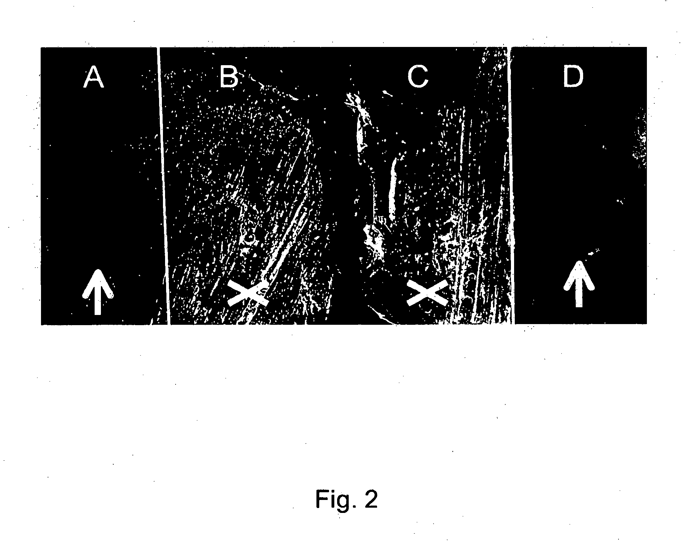

- Fig. 2:: Comparison of uncoated (native) mineral glass (panels A, B) and glass having an anti-reflective coating (panels C, D). The attempts to wipe off the applied adhesive (Ottoseal 50) caused smudging on uncoated glass (panel A), but allowed easy removal of adhesive from the glass having an anti-reflective coating (panel D).

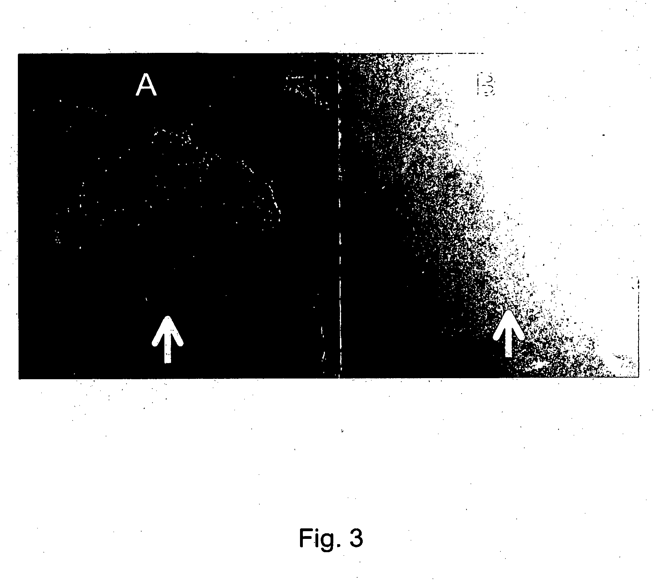

- Fig. 3:: Further comparison of uncoated mineral glass (panel A) and glass having an anti-reflective coating (panel B). The attempts to wipe off the applied adhesive (Ottoseal 100) caused serious smudging on uncoated glass (panel A), but allowed easy removal of adhesive from the glass having an anti-reflective coating (panel B).

## Claims

1. Method for the production of a photographic picture comprising a photograph bonded with its face to a transparent carrier, the method comprising the following steps:
a) providing a transparent carrier made of anti-reflective glass,
b) applying an appropriate amount of a silicone adhesive to the carrier of step (a),
c) forming a sandwich by applying to the carrier of step (a) a photograph with its face towards the face of the carrier to which the adhesive had been applied,
d) applying pressure to the sandwich of carrier, adhesive and photograph, and, where appropriate,
e) bonding the back of the photograph to a protective layer,
wherein, alternatively, the silicone adhesive of step (b) may also be applied to the face of the photograph instead of being applied to the carrier.

2. Method according to claim 1, **characterized in that** the adhesive is an acidic silicone adhesive.

3. Method according to any of claims 1 or 2, **characterized in that** the transparent carrier is coated with an anti-reflective coating only on the side distal to the photograph.

4. Method according to any of claims 1-3, **characterized in that** the protective layer on the back is selected from a sheet of aluminum, an aluminum sandwich material or a plastic material such as, e.g., polystyrene.

5. Method according to any of claims 1-4, **characterized in that** the photograph is selected from the group of:
i. a picture formed by exposing to light and developing a sheet of black-and-white photographic paper,
ii. a picture formed by exposing to light and developing a sheet of colour photographic paper based on the RA-4 process,
iii. a picture formed by exposing to light and developing a sheet of colour photographic paper based on the silver dye-bleaching process, and
iv. a picture formed by printing onto a medium (the medium, if appropriate, being **characterized by** an acceptable coating), for example a medium made of paper, with appropriate ink, inks or dyes.

6. Use of a pane of anti-reflective glass as the transparent carrier in the production of a photographic picture, the photographic picture comprising a photograph bonded by use of a silicone adhesive with its face to a transparent carrier and, if appropriate, comprising a protective layer on the back of the photograph.

7. Use of claim 6, **characterized in** the pane being coated with an anti-reflective coating only on the side distal to the photograph.

8. Photographic picture, comprising a photograph bonded by use of a silicone adhesive with its face to a transparent carrier and, optionally, comprising a protective layer on its back, **characterized in that** the transparent carrier is made of anti-reflective glass.

9. Photographic picture according to claim 8, **characterized in that** the transparent carrier is a pane.

10. Photographic picture according to claim 8 or 9, **characterized in that** the bonding is mediated by an acidic silicone adhesive.

11. Photographic picture according to any of claims 8-10, **characterized in that** the transparent carrier is coated with an anti-reflective coating only on the side distal to the photograph.

12. Photographic picture according to any of claims 8-11, **characterized in that** the protective layer on the back is selected from a sheet of aluminum, an aluminum sandwich material or a plastic material such as, e.g., polystyrene.

13. Photographic picture according to any of claims 8-12, **characterized in that** the photograph is selected from:
i. a picture formed by exposing to light and developing a sheet of black-and-white photographic paper,
ii. a picture formed by exposing to light and developing a sheet of colour photographic paper based on the RA-4 process,
iii. a picture formed by exposing to light and developing a sheet of colour photographic paper based on the silver dye-bleaching process, and
iv. a picture formed by printing onto a medium (the medium, if appropriate, being **characterized by** an acceptable coating), for example a medium made of paper, with appropriate ink, inks or dyes.

## Patentansprüche

1. Verfahren zur Herstellung eines photographischen Bildes, umfassend eine bildseitig mit einem transparenten Träger verbundene Photographie, welches die folgenden Schritte umfaßt:
a) Bereitstellung eines transparenten Trägers aus entspiegeltem Glas,
b) Aufbringen einer geeigneten Menge an Klebemittel auf Silikonbasis auf den Träger aus Schritt (a),
c) Herstellung eines Sandwiches, indem eine Photographie mit ihrer Bildseite auf die Seite des Trägers aus Schritt (a) aufgebracht wird, auf welche das Klebemittel aufgebracht worden war,
d) Ausübung von Druck auf den Sandwich-Aufbau aus Träger, Klebemittel und Photographie, sowie gegebenenfalls
e) Verbinden der Rückseite der Photographie mit einer Schutzschicht,
wobei in einer Alternative das Klebemittel auf Silikonbasis aus Schritt (b) auf die Bildseite der Photographie statt auf den Träger aufgebracht wird.

2. Verfahren nach Anspruch 1, **dadurch gekennzeichnet, daß** das Klebemittel ein saures Klebemittel auf Silikonbasis ist.

3. Verfahren nach einem der Ansprüche 1 oder 2, **dadurch gekennzeichnet, daß** der transparente Träger nur einseitig entspiegelt ist und sich die Entspiegelungsschicht auf der der Photographie abgewandten Seite befindet.

4. Verfahren nach einem der Ansprüche 1-3, **dadurch gekennzeichnet, daß** die rückwärtige Schutzschicht ausgewählt ist aus einer Tafel aus Aluminium, einem Aluminiumverbundmaterial oder einem Kunststoff wie beispielsweise Polystyrol.

5. Verfahren nach einem der Ansprüche 1-4, **dadurch gekennzeichnet, daß** die Photographie ausgewählt ist aus:
i) einem Bild, das durch Belichtung und Entwicklung eines Schwarzweiß-Photopapiers erzeugt wurde,
ii) einem Bild, das durch Belichtung und Entwicklung eines Farb-Photopapiers auf RA-4-Basis erzeugt wurde,
iii) einem Bild, das durch Belichtung und Entwicklung eines Farb-Photopapiers nach dem Silberfarbbleichverfahren erzeugt wurde,
iv) einem Bild, das durch Bedrucken eines gegebenenfalls auf geeignete Weise beschichteten Trägers, beispielsweise eines Papierträgers, mit geeigneter Tinte, geeigneten Tinten oder geeigneten Farbstoffen erzeugt wurde.

6. Verwendung einer Scheibe aus entspiegeltem Glas als transparentem Träger zur Herstellung eines photographischen Bildes, welches eine mittels eines Klebemittels auf Silikonbasis bildseitig mit dem transparenten Träger verbundene Photographie sowie gegebenenfalls eine rückwärtige Schutzschicht umfaßt.

7. Verwendung nach Anspruch 6, wobei die Scheibe nur einseitig entspiegelt ist und sich die Entspiegelung auf der der Photographie abgewandten Seite befindet.

8. Photographisches Bild, umfassend eine mittels eines Klebemittels auf Silikonbasis bildseitig mit einem transparenten Träger verbundene Photographie sowie gegebenenfalls eine rückwärtige Schutzschicht, **dadurch gekennzeichnet, daß** es sich bei dem transparenten Träger um entspiegeltes Glas handelt.

9. Photographisches Bild nach Anspruch 8, **dadurch gekennzeichnet, daß** der transparente Träger die Form einer Scheibe hat.

10. Photographisches Bild nach Anspruch 8 oder 9, **dadurch gekennzeichnet, daß** die Verbindung mittels eines sauren Klebemittels auf Silikonbasis erfolgt.

11. Photographisches Bild nach einem der Ansprüche 8-10, **dadurch gekennzeichnet, daß** der transparente Träger nur einseitig entspiegelt ist und sich die Entspiegelung auf der der Photographie abgewandten Seite befindet.

12. Photographisches Bild nach einem der Ansprüche 8-11, **dadurch gekennzeichnet, daß** die rückwärtige Schutzschicht ausgewählt ist aus einer Tafel aus Aluminium, einem Aluminiumverbundmaterial oder einem Kunststoff wie beispielsweise Polystyrol.

13. Photographisches Bild nach einem der Ansprüche 8-12, **dadurch gekennzeichnet, daß** die Photographie ausgewählt ist aus:
i) einem Bild, das durch Belichtung und Entwicklung eines Schwarzweiß-Photopapiers erzeugt wurde,
ii) einem Bild, das durch Belichtung und Entwicklung eines Farb-Photopapiers auf RA-4-Basis erzeugt wurde,
iii) einem Bild, das durch Belichtung und Entwicklung eines Farb-Photopapiers nach dem Silberfarbbleichverfahren erzeugt wurde,
iv) einem Bild, das durch Bedrucken eines gegebenenfalls auf geeignete Weise beschichteten Trägers, beispielsweise eines Papierträgers, mit geeigneter Tinte, geeigneten Tinten oder geeigneten Farbstoffen erzeugt wurde.

## Revendications

1. Procédé de production d'une image photographique comprenant une photographie dont la surface avant est collée à un support transparent, le procédé comprenant les étapes suivantes :
a) fourniture d'un support transparent constitué d'un verre antireflet,
b) application d'une quantité appropriée d'un adhésif de silicone sur le support de l'étape (a),
c) formation d'un sandwich par application sur le support de l'étape (a) d'une photographie avec sa surface avant orientée vers la surface du support sur laquelle l'adhésif a été appliqué,
d) application d'une pression sur le sandwich de support, adhésif et photographie, et, le cas échéant,
e) collage de l'arrière de la photographie à une couche protectrice,
dans lequel, en variante, l'adhésif de silicone de l'étape (b) peut également être appliqué sur la surface avant de la photographie au lieu d'être appliqué sur le support.

2. Procédé selon la revendication 1, **caractérisé en ce que** l'adhésif est un adhésif de silicone acide.

3. Procédé selon l'une quelconque des revendications 1 ou 2, **caractérisé en ce que** le support transparent est revêtu avec un revêtement antireflet uniquement sur le côté distal par rapport à la photographie.

4. Procédé selon l'une quelconque des revendications 1 à 3, **caractérisé en ce que** la couche protectrice sur l'arrière est choisie parmi une feuille d'aluminium, un matériau de sandwich d'aluminium ou un matériau plastique tel que, par exemple, du polystyrène.

5. Procédé selon l'une quelconque des revendications 1 à 4, **caractérisé en ce que** la photographie est choisie dans le groupe de :
i. une image formée par exposition à la lumière et révélation d'une feuille de papier photographique noir et blanc,
ii. une image formée par exposition à la lumière et révélation d'une feuille de papier photographique couleur basée sur le procédé RA-4,
iii. une image formée par exposition à la lumière et révélation d'une feuille de papier photographique couleur basée sur le procédé de blanchiment des colorants par l'argent, et
iv. Une image formée par impression sur un support (le support, le cas échéant, étant **caractérisé par** un revêtement acceptable), par exemple, un support constitué de papier, avec une encre, des encres ou des colorants appropriés.

6. Utilisation d'une vitre de verre antireflet en tant que support transparent dans la production d'une image photographique, l'image photographique comprenant une photographie collée au moyen d'un adhésif de silicone avec sa surface avant orientée vers un support transparent et, le cas échéant, comprenant une couche protectrice sur la surface arrière de la photographie.

7. Utilisation de la revendication 6, **caractérisée en ce que** la vitre est revêtue avec un revêtement antireflet uniquement sur le côté distal par rapport à la photographie.

8. Image photographique, comprenant une photographie collée au moyen d'un adhésif de silicone avec sa surface avant orientée vers un support transparent et, facultativement, comprenant une couche protectrice sur sa surface arrière, **caractérisée en ce que** le support transparent est constitué de verre antireflet.

9. Image photographique selon la revendication 8, **caractérisée en ce que** le support transparent est une vitre.

10. Image photographique selon la revendication 8 ou 9, **caractérisée en ce que** le collage est effectué à l'aide d'un adhésif de silicone acide.

11. Image photographique selon l'une quelconque des revendications 8 à 10, **caractérisée en ce que** le support transparent est revêtu avec un revêtement antireflet uniquement sur le côté distal par rapport à la photographie.

12. Image photographique selon l'une quelconque des revendications 8 à 11, **caractérisée en ce que** la couche protectrice sur la surface arrière est choisie parmi une feuille une feuille d'aluminium, un matériau de sandwich d'aluminium ou un matériau plastique tel que, par exemple, du polystyrène.

13. Image photographique selon l'une quelconque des revendications 8 à 12, **caractérisée en ce que** la photographie est choisie parmi .
i. une image formée par exposition à la lumière et révélation d'une feuille de papier photographique noir et blanc,
ii. une image formée par exposition à la lumière et révélation d'une feuille de papier photographique couleur basée sur le procédé RA-4,
iii. une image formée par exposition à la lumière et révélation d'une feuille de papier photographique couleur basée sur le procédé de blanchiment des colorants par l'argent, et
iv. Une image formée par impression sur un support (le support, le cas échéant, étant **caractérisé par** un revêtement acceptable), par exemple, un support constitué de papier, avec une encre, des encres ou des colorants appropriés.
